# EUROPÄISCHE PATENTSCHRIFT

(11) **EP 2 042 254 B1**
(45) Veröffentlichungstag und Bekanntmachung des Hinweises auf die Patenterteilung: **18.11.2009**
(21) Anmeldenummer: 07018989.9
(22) Anmeldetag: 27.09.2007
(51) Int. Cl.: B23B 31/18

(54) **Kraftspannfutter**
Power collet chuck
Mandrin de puissance

(43) Veröffentlichungstag der Anmeldung: 01.04.2009
(73) Patentinhaber: SMW-Autoblok Spannsysteme GmbH, 88074 Meckenbeuren (DE)
(72) Erfinder: Bronzino, Walter, Dipl.-Ing., 10040 Caprie Torino (IT); Bronzino, Pier Mauro, Dipl.-Ing., 10040 Caprie Torino (IT)
(74) Vertreter: Engelhardt, Guido

(56) Entgegenhaltungen:
- EP-A- 0 251 266
- EP-A- 0 686 449
- JP-A- 1 135 404
- US-A- 3 233 908
- US-B1- 6 634 652

## Beschreibung

Die Erfindung bezieht sich auf ein Kraftspannfutter mit zwei oder mehreren radial verstellbaren Spannbacken, die jeweils an einem begrenzt verschwenkbar in einem Futterkörper gelagerten und entgegen der Kraft einer Feder axial verschiebbaren Umlenkhebel befestigt sind, wobei die Umlenkhebel durch auf deren den Spannbacken gegenüberliegenden Enden einwirkende Treibbacken betätigbar sind, die mittels eines Verstellkolbens oder dergleichen über Schrägflächen beeinflussbar sind, und wobei der Futterkörper eine Anlagefläche für das einzuspannende Werkstück aufweist.

Ein derartiges auch als Niederzugspannfutter bezeichnetes Kraftspannfutter ist durch die europäische Patentanmeldung 0 251 266 A2 bekannt. Die Umlenkhebel sind bei dieser Ausgestaltung jeweils über eine kugelige Außenmantelfläche in in den Futterkörper eingearbeitete zylindrische Freisparungen begrenzt verschiebbar gelagert und der axiale Verstellweg der Umlenkhebel, durch den der Niederzug des Kraftspannfutters bestimmt ist, ist mit Hilfe eines durch die Kraft einer Feder beaufschlagten Druckstückes einstellbar.

Da somit die Gelenkbolzen über die Kugelflächen an den zylindrischen Flächen des Futterkörpers abgestützt sind, ist in Spannstellung nur eine Linienberührung zwischen diesen Bauteilen gegeben. Bereits nach kurzer Zeit können somit im Bereich der Lagerstelle, zumal auch Axialverschiebungen auftreten, Beschädigungen hervorgerufen werden, so dass eine exakte Einspannung des zu bearbeitenden Werkstückes nicht mehr gegeben ist. Außerdem weist dieses bekannte Kraftspannfutter aufgrund der linienförmigen Abstützung der Umlenkhebel nur eine geringe Drehsteifigkeit auf, die Spannbacken federn demnach oftmals gegenüber dem eingespannten Werkstück. Dieses Niederzugspannfutter genügt demnach vielfach nicht den gestellten Anforderungen.

Aufgabe der Erfindung ist es daher, ein Kraftspannfutter der vorgenannten Gattung in der Weise auszugestalten, dass nicht nur exakte Einspannungen von Werkstücken über einen langen Zeitraum und eine stets hohe Steifigkeit gegeben sind, sondern dass auch ein Verschleiß weitgehend vermieden wird. Vor allem aber soll erreicht werden, dass das Kraftspannfutter eine hohe Drehsteifigkeit aufweist und somit vielseitig einsetzbar ist. Des Weiteren soll das vorschlagsgemäß ausgebildete Kraftspannfutter nahezu wartungsfrei sein und eine lange Lebensdauer aufweisen.

Gemäß der Erfindung wird dies bei dem Kraftspannfutter der vorgenannten Art dadurch erreicht, dass die Umlenkhebel jeweils auf einem diese durchgreifenden Gelenkbolzen verschwenkbar gelagert sind, dass die Gelenkbolzen im Futterkörper drehfest abgestützt und begrenzt axial verschiebbar geführt sind und dass die die Umlenkhebel durchgreifenden Gelenkbolzen jeweils eine mittig angeordnete zylindrische Lagerfläche für die Umlenkhebel und in den beiden Endbereichen parallel zu der Lagerfläche gerichtete Anlageflächen zur verdrehfesten Abstützung und zur Begrenzung des axialen Verstellweges aufweisen, die mit an dem Futterkörper vorgesehenen Gegenflächen zusammenwirken, wobei auch die zylindrische Lagerfläche und die beiderseits von dieser angeordneten Anlageflächen sich jeweils etwa über ein Drittel der axialen Länge des Gelenkbolzens erstrecken sollten.

Die Anlageflächen zur verdrehfesten Abstützung der Gelenkbolzen sind zweckmäßigerweise auf den der Längsachse und/oder der Außenmantelfläche des Futterkörpers zugekehrten Seiten an den Gelenkbolzen anzuarbeiten, die Anlageflächen zur Begrenzung des axialen Verstellweges der Gelenkbolzen dagegen auf deren den Treibbacken zugekehrten Seiten, wobei die an den Gelenkbolzen vorgesehenen Anlageflächen jeweils achssenkrecht zueinander ausgerichtet sein sollten.

Der Versatz der zur Begrenzung des axialen Verstellweges vorgesehenen Anlageflächen gegenüber der zylindrischen Lagerfläche sollte dem vorgegebenen Niederzugweg des Kraftspannfutters entsprechen.

Es ist aber auch möglich, den vorgegebenen Niederzugweg des Kraftspannfutters durch in den Futterkörper im Bereich der freien Enden der Gelenkbolzen in die der Stirnfläche des Futterkörpers zugekehrten Flächen einzuarbeitende Freisparungen und/oder durch den Versatz der Anlageflächen der Gelenkbolzen gegenüber der zylindrischen Lagerfläche zu bestimmen.

Zur verdrehfesten Abstützung der Gelenkbolzen sollte der Futterkörper im Bereich der diese aufnehmenden Öffnung mit einer oder zwei den Anlageflächen zugeordneten Gegenflächen versehen sein. Auch sollte der Futterkörper im Bereich der Freisparung zur Aufnahme der Gelenkbolzen jeweils eine achssenkrecht verlaufende und der Stirnseite des Futterkörpers zugekehrten Gegenfläche zur Anlage der Gelenkbolzen in Spannstellung aufweisen.

Um die Wartungsfreiheit zu steigern, sollten des Weiteren die Durchführungen der Umlenkhebel, des Verstellkolbens und gegebenenfalls weiterer aneinander anliegender Bauteile des Kraftspannfutters mittels eingesetzter Dichtungen flüssigkeitsdicht verschlossen sein.

Wird ein Kraftspannfutter gemäß der Erfindung ausgebildet, so ist gewährleistet, dass Werkstücke stets exakt, und da ein Verschleiß an den verstellbaren Bauteilen nahezu ausgeschlossen ist, auch über einen langen Zeitraum einzuspannen sind. Die Lagerung der Umlenkhebel auf den begrenzt axial verschiebbaren Gelenkbolzen ermöglicht nämlich eine drehfeste Abstützung im Futterkörper, so dass eine hohe Steifigkeit und damit auch eine hohe Wiederholspanngenauigkeit, insbesondere beim Umspannen von Werkstücken gegeben sind.

Des Weiteren weist das vorschlagsgemäß ausgebildete Kraftspannfutter eine kompakte Bauweise auf und dieses ist, da alle Durchbrechungen abgedichtet sind, vor Verschmutzung zuverlässig geschützt. Und da stets eine hohe Rundlaufgenauigkeit bei einfacher Handhabung gewährleistet ist, ist ein vielseitiger Einsatz ohne Schwierigkeiten möglich.

In der Zeichnung ist ein gemäß der Erfindung ausgebildetes Kraftspannfutter dargestellt, das nachfolgend im Einzelnen erläutert ist. Hierbei zeigt:
- Figur 1: das Kraftspannfutter in einem axialen Schnitt,
- Figuren 2 und 3: das Kraftspannfutter nach Figur 1, in Teilschnitten und in unterschiedlichen Betriebsstellungen,

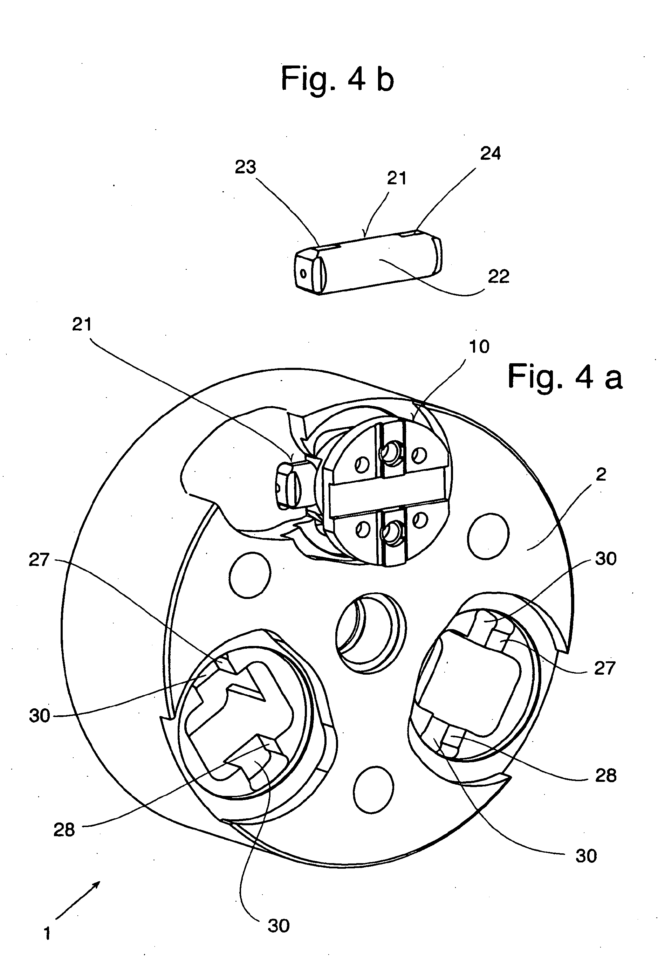

- Figur 4a: den Futterkörper des Kraftspannfutters nach Figur 1 mit einem eingesetzten Umlenkhebel, in einer perspektivischer Darstellung,
- Figur 4b: den in den Umlenkhebel nach Figur 4a eingebauten Gelenkbolzen in einer Einzeldarstellung und
- Figur 5: den Gelenkbolzen nach Figur 4a in einer vergrößerten perspektivischen Wiedergabe.

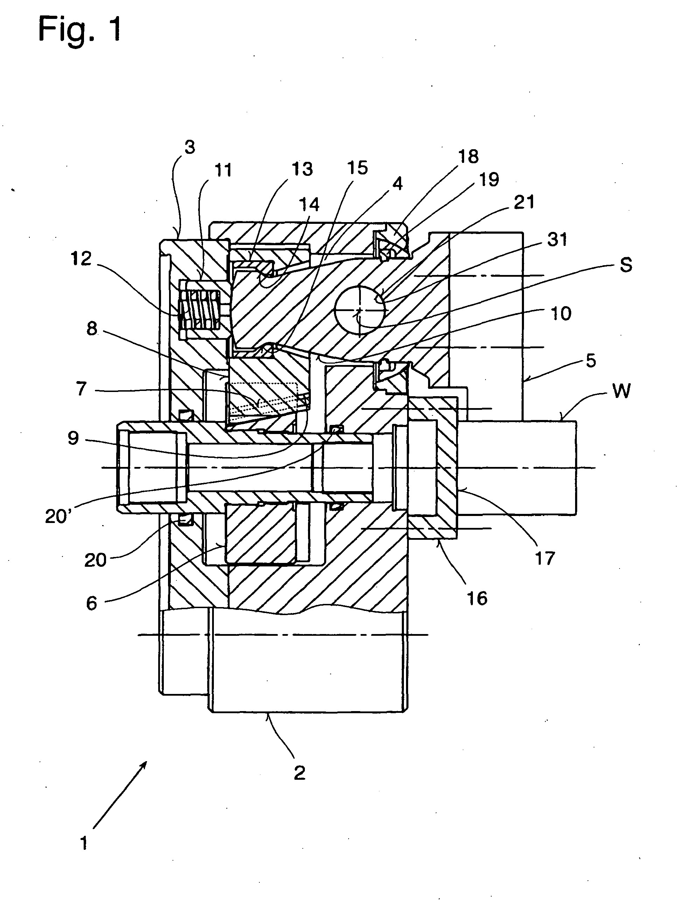

Das in den Figuren 1 bis 3 dargestellte und mit 1 bezeichnete Kraftspannfutter, das auch als Niederzugspannfutter bezeichnet wird, dient zum präzisen Einspannen von Werkstücken W, die bei der Bearbeitung plan anliegen und mittels radial verstellbarer Spannbacken 5 einspannbar sind. Das Kraftspannfutter 1 besteht hierbei im Wesentlichen aus einem Futterkörper 2, der auf der Rückseite durch einen Flansch 3 verschlossen ist und in den der Anzahl der Spannbacken 5 entsprechend Freisparungen 4 zur Aufnahme von Umlenkhebeln 10 eingearbeitet sind, an denen die Spannbacken 5 auswechselbar befestigt sind. Durch Verschwenken der Umlenkhebel 10 um eine Achse S werden die Spannbacken 5 zum Einspannen des Werkzeuges W radial zugestellt, zum Lösen der Einspannung werden dagegen die Spannbacken 5 nach außen geschwenkt.

Um die Schwenkbewegungen der Umlenkhebel 10 ausführen zu können, ist ein axial verschiebbarer Verstellkolben 6 vorgesehen, der mit Keilhaken 7 ausgestattet ist und mit Treibbacken 8 in Triebverbindung steht, die mittels eingearbeiteter Keilhaken 9 in die Keilhaken 7 des Verstellkolbens 6 eingreifen. Durch axiale Verstellbewegungen des Verstellkolbens 6 werden somit die Umlenkhebel 10 um die Achse S geschwenkt und die Spannbacken 5 werden radial nach innen oder außen verstellt.

Damit stets eine exakte Bearbeitung eines eingespannten Werkstückes W gewährleistet ist, ist der Futterkörper 2 mit einer Anlagefläche 17 versehen, die durch einen auswechselbaren Anschlagring 16 gebildet ist. Vor dem Einspannen des Werkstückes W wird dieses gegen die Anlagefläche 17 gezogen, und zwar durch die Spannbacken 5, die dazu geringfügig axial verstellbar sind.

Um dies zu ermöglichen, greifen die den Spannbacken 5 abgewandten Enden der Umlenkhebel 10 jeweils in eine Büchse 13 ein, die mit geneigten Schrägflächen 14 ausgestattet ist. Auch die Umlenkhebel 10 sind mit zugeordneten Schrägflächen 15 versehen, so dass durch eine Radialverschiebung der Treibbacken 8 und mit diesen auch der Büchsen 13 eine axiale Verschiebung der Umlenkhebel 10 nach links ausgelöst wird und somit die Spannbacken 5 eine axiale Kraft in Richtung der Anlagefläche 17 auf das Werkstück W ausüben.

Zur Rückführung der Umlenkhebel 10 beim Öffnen des Kraftspannfutters 1 dient ein Druckstück 11, auf das eine Druckfeder 12 einwirkt, die an dem Flansch 3 abgestützt ist.

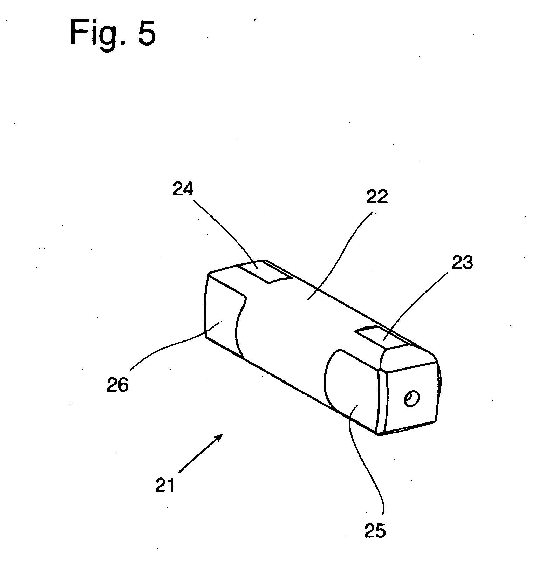

Zur verschwenkbaren und begrenzt axial verschiebbaren aber dennoch drehfesten Lagerung der Umlenkhebel 10 im Futterkörper 2 sind Gelenkbolzen 21 vorgesehen, die in die Umlenkhebel 10 eingearbeitete Bohrungen 31 durchgreifen und zylindrische Lagerflächen 22 aufweisen, auf denen die Umlenkhebel 10 abgestützt sind. Des Weiteren sind die Gelenkbolzen 21, wie dies insbesondere der Figur 5 zu entnehmen ist, auf zwei einander gegenüber liegenden Seiten mit Anlageflächen 23 und 24 ausgestattet, die an an dem Futterkörper 2 angearbeiteten Gegenflächen 27 und 28 anliegen. Dadurch sind die Gelenkbolzen 21 verdrehfest in dem Futterkörper 2 gehalten.

Achssenkrecht zu den Anlageflächen 23 und 24 sind auf den den Treibbacken 8 zugekehrten Seiten der Gelenkbolzen 10 an diesen weitere Anlageflächen 25 und 26 angearbeitet, die mit an dem Futterkörper 2 vorgesehenen Gegenflächen 29 und 30 zusammenwirken. Der Versatz der Anlageflächen 25 und 26 der Gelenkbolzen 21 gegenüber der zylindrischen Lagerfläche 22 entspricht der axialen Wegstrecke, um die die Umlenkhebel 10 und somit auch die Spannbacken 5 bei einem eigentlichen Spannvorgang in Richtung des Verstellkolbens 6 axial verschoben werden. Es ist aber auch möglich, die im Futterkörper vorgesehenen Anlageflächen 29 und 30 um den vorgegebenen Niederzugweg zurückzusetzen, ohne dass somit an dem Gelenkbolzen 21 entsprechende Anlageflächen vorgesehen sind. Selbstverständlich können aber auch beide Möglichkeiten miteinander kombiniert werden.

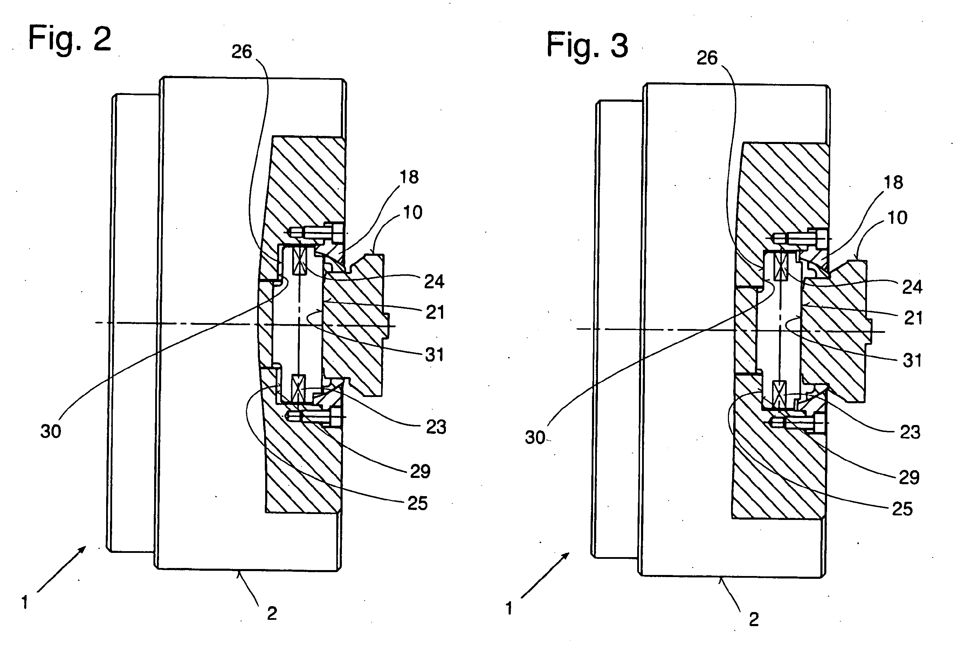

In Figur 2 ist das Kraftspannfutter 1 in geöffneter Betriebsstellung gezeigt. Die Gelenkbolzen 21 liegen hierbei über Absätze an Deckeln 18 an, durch die die Freisparungen 4 verschlossen sind. Zwischen den Anlageflächen 25 und 26 der Gelenkbolzen 21 und den Gegenflächen 29 und 30 des Futterkörpers 2 ist somit ein Spalt gebildet, der dem axialen Verstellweg entspricht, um den die Gelenkbolzen 21 vor dem Spannvorgang zu verschieben sind.

Die Darstellung in Figur 3 zeigt das Kraftspannfutter 1 in Spannstellung. Die Anlageflächen 25 und 26 sind in dieser Betriebsstellung an den Gegenflächen 29 und 30 abgestützt. Zwischen dem Deckel 18 und dem Gelenkbolzen 21 ist nunmehr ein Spalt gebildet, der dem Versatz der Anlageflächen 26 und 27 gegenüber der zylindrischen Lagerfläche 22 und damit dem axialen Verstellweg entspricht.

Durch die Abstützung der Umlenkhebel 10 mittels diese durchgreifende Gelenkbolzen 21 ist somit ein Niederzugspannfutter geschaffen, das nahezu wartungsfrei ist, da die Durchbrechungen 4 der Umlenkhebel 10 in den Deckeln 18 sowie des Verstellkolbens 6 mittels Dichtungen 19 bzw. 20 und 20' flüssigkeitsdicht verschlossen sind, und das bei kompakter Bauweise eine hohe Standfestigkeit und Widerholspanngenauigkeit aufweist und stets eine exakte Einspannung des Werkstückes W gewährleistet..

## Patentansprüche

1. Kraftspannfutter (1) mit zwei oder mehreren radial verstellbaren Spannbacken (5), die jeweils an einem verschwenkbar in einem Futterkörper (2) gelagerten und entgegen der Kraft einer Feder (12) axial verschiebbaren Umlenkhebel (10) befestigt sind, wobei die Umlenkhebel (10) durch auf deren den Spannbacken (2) gegenüberliegenden Enden einwirkende Treibbacken (8) betätigbar sind, die mittels eines Kolbens (6) oder dergleichen über Schrägflächen (7 bzw. 9) beeinflussbar sind und wobei der Futterkörper (2) eine Anlagefläche für das einzuspannende Werkstück (W) aufweist,
**dadurch gekennzeichnet,**
**dass** die Umlenkhebel (10) jeweils auf einem diese durchgreifenden Gelenkbolzen (21) verschwenkbar gelagert sind, dass die Gelenkbolzen (21) im Futterkörper (2) drehfest abgestützt und begrenzt axial verschiebbar geführt sind und dass die die Umlenkhebel (10) durchgreifenden Gelenkbolzen (21) jeweils eine mittig angeordnete zylindrische Lagerfläche (22) für die Umlenkhebel (10) und in den beiden Endbereichen parallel zu der Lagerfläche gerichtete Anlageflächen (23, 24 bwz. 25, 26) zur verdrehfesten Abstützung und zur Begrenzung des axialen Verstellweges aufweisen, die mit an dem Futterkörper (2) vorgesehenen Gegenflächen (27, 28 bzw. 29, 30) zusammenwirken.

2. Kraftspannfutter nach Anspruch 1,
**dadurch gekennzeichnet,**
**dass** die zylindrische Lagerfläche (22) und die beiderseits von dieser angeordneten Anlageflächen (23, 24 bzw. 25, 26) sich jeweils etwa über ein Drittel der axialen Länge des Gelenkbolzens (21) erstrecken.

3. Kraftspannfutter nach Anspruch 1 oder 2,
**dadurch gekennzeichnet,**
**dass** die Anlageflächen (23, 24) zur verdrehfesten Abstützung der Gelenkbolzen (21) auf den der Längsachse und/oder der Außenmantelfläche des Futterkörpers (2) zugekehrten Seiten an den Gelenkbolzen (21) angearbeitet sind.

4. Kraftspannfutter nach einem der Ansprüche 1 bis 3,
**dadurch gekennzeichnet,**
**dass** die Anlageflächen (25, 26) zur Begrenzung des axialen Verstellweges der Gelenkbolzen (21) auf deren den Treibbacken (8) zugekehrten Seiten an den Gelenkbolzen (21) angearbeitet sind.

5. Kraftspannfutter nach Anspruch 3 oder 4,
**dadurch gekennzeichnet,**
**dass** die an den Gelenkbolzen (21) vorgesehenen Anlageflächen (23, 24 bzw. 25, 26) jeweils achssenkrecht zueinander ausgerichtet sind.

6. Kraftspannfutter nach einem der Ansprüche 1 oder 5,
**dadurch gekennzeichnet,**
**dass** der Versatz der zur Begrenzung des axialen Verstellweges vorgesehenen Anlageflächen (25, 26) gegenüber der zylindrischen Lagerfläche (22) dem vorgegebenen Niederzugweg des Kraftspannfutters (1) entspricht.

7. Kraftspannfutter nach einem der Ansprüche 1 bis 6,
**dadurch gekennzeichnet,**
**dass** der vorgegebene Niederzugweg des Kraftspannfutters (1) durch in den Futterkörper (2) im Bereich der freien Enden der Gelenkbolzen (21) in die der Stirnfläche des Futterkörpers (2) zugekehrten Flächen eingearbeitete Aussparungen und/oder durch den Versatz der Anlageflächen (25, 26) der Gelenkbolzen (21) gegenüber der zylindrischen Lagerfläche (22) bestimmt ist.

8. Kraftspannfutter nach einem der Ansprüche 1 bis 7,
**dadurch gekennzeichnet,**
**dass** der Futterkörper (2) zur verdrehfesten Abstützung der Gelenkbolzen (21) im Bereich der diese aufnehmenden Freisparung (4) mit einer oder zwei den Anlageflächen(23, 24) zugeordneten Gegenflächen(27, 28) versehen ist.

9. Kraftspannfutter nach einem der Ansprüche 1 bis 8,
**dadurch gekennzeichnet,**
**dass** der Futterkörper (2) im Bereich der Freisparung (4) zur Aufnahme der Gelenkbolzen (10) jeweils mit einer achssenkrecht verlaufenden und der Stirnseite des Futterkörpers (2) zugekehrten Gegenfläche (29, 30) zur Anlage der Gelenkbolzen (10) in Spannstellung versehen ist.

10. Kraftspannfutter nach einem der Ansprüche 1 bis 9,
**dadurch gekennzeichnet,**
**dass** die Durchführungen der Umlenkhebel (10), des Kolbens (6) und gegebenenfalls weiterer aneinander anliegender Bauteile des Kraftspannfutters (1) mittels eingesetzter Dichtungen (19, 20, 20') flüssigkeitsdicht verschlossen sind.

## Claims

1. A power collet chuck (1) with two or more radially adjustable clamping jaws (5), each of which is attached to an articulation lever (10) that is axially adjustable against the force of a spring (12) and which is mounted in a chuck body (2) and can swivel to a limited extent, in which case the articulation levers (10) can be actuated by driving jaws (8) acting on the ends of the articulation levers (10) opposite to the clamping jaws (5) with the driving jaws (8) being influenced by a piston (6) or the like by means of inclined surfaces (7 or 9), and in which case the chuck body (2) has a contact surface for the workpiece (W) to be clamped,
**characterised in that,**
each of the articulation levers (10) is mounted in a swivelling arrangement on articulation pins (21) that pass through them, that the articulation pins (21) are supported in the chuck body (2) so that they cannot rotate and are guided to permit limited axial movement and that each of the articulation pins (21) that passes through the articulation levers (10) has a centrally arranged cylindrical bearing surface (22) for the articulation levers (10) and contact surfaces (23, 24 or 25, 26) in both end areas directed in parallel to the bearing surface in order to provide support without rotation and to limit the axial adjustment travel, in which case these surfaces (23, 24 or 25, 26) act in conjunction with counter surfaces (27, 28 or 29, 30) provided on the chuck body (2).

2. The power collet chuck in accordance with Claim 1,
**characterised in that,**
the cylindrical bearing surface (22) and the contact surfaces (23, 24 or 25, 26) arranged on both sides of the bearing surface (22) each extending along about one third of the axial length of the articulation pin (21).

3. The power collet chuck in accordance with Claim 1 or 2,
**characterised in that,**
the contact surfaces (23, 24) for rotationally fixed support of the articulation pins (21) are worked onto the articulation pins (21) on the sides facing the lengthways axis and/or the outer jacket surface of the chuck body (2).

4. The power collet chuck in accordance with Claims 1 tor 3,
**characterised in that,**
the contact surfaces (25, 26) for limiting the axial adjustment travel of the articulation pins (21) are located on the articulation pin (21) surfaces facing the driving jaws (8).

5. The power collet chuck in accordance with Claim 3 or 4,
**characterised in that,**
each of the contact surfaces (23, 24 or 25, 26) provided on the articulation pins (21) should be arranged at right angles to one another.

6. The power collet chuck in accordance with Claim 1 or 5,
**characterised in that,**
the offset of the contact surfaces (25, 26) in relation to the cylindrical bearing surface (22) for limiting the axial adjustment travel corresponds to the hold-down travel given for the power collet chuck (1).

7. The power collet chuck in accordance with Claims 1 to 6,
**characterised in that,**
the specified hold-down travel of the power collet chuck (1) is determined by openings worked into the chuck body (2) in the area of the free ends of the articulation pins (21) in the surfaces facing the end surface of the chuck body (2) and/or by the offset of the contact surfaces (25, 26) of the articulation pins (21) in relation to the cylindrical bearing surface (22).

8. The power collet chuck (1) in accordance with Claims 1 to 7,
**characterised in that,**
the chuck body (2) is provided with one or two counter surfaces (27, 28) facing the contact surfaces (23, 24) in the area of the opening (4) that accommodates the articulation pins (21).

9. The power collet chuck in accordance with Claims 1 to 8,
**characterised in that,**
the chuck body (2) in the area of each opening (4) for accommodating the articulation pins (10) has a counter surface (29, 30) running axially and facing the end of the chuck body (2) as a contact for the articulation pins (10) in the clamped position.

10. The power collet chuck (1) in accordance with Claims 1 to 9,
**characterised in that,**
the passages in the articulation levers (10), in the piston (6) and in any other components of the power collet chuck (1) in contact with one another are provided with a liquid-tight seal by means of inserted seals (19, 20, 20').

## Revendications

1. Mandrin de puissance (1) comprenant un ou plusieurs mors de serrage (5) radialement réglables, fixés respectivement sur un levier de renvoi (10) logé dans un corps de mandrin (2) et axialement déplaçable contre la force d'un ressort (12), les leviers de renvoi (10) étant actionnés par des mors d'entraînement (8) agissant sur leurs extrémités opposées aux mors de serrage (5) et commandés par un piston (6) ou un moyen similaire, moyennant des faces obliques (7 ou 9), et où le corps de mandrin (2) comporte une face de butée pour la pièce à usiner (W) qui y est serrée,
**caractérisé en ce que**
les leviers de renvoi (10) sont logés pivotant respectivement sur un boulon articulé (21) qui les traverse, que les boulons articulés (21) sont appuyés de manière à résister à la torsion, tout en permettant un déplacement axial limité, dans le corps de mandrin (2) et que les boulons articulés (21) traversant les leviers de renvoi (10) comportent respectivement au centre une face de portée cylindrique (22) pour les leviers de renvoi (10) et, aux deux extrémités, des faces de butée (23, 24 ou 25, 26) orientées parallèles par rapport à la face de portée, pour l'appui anti-torsion et pour la limitation de la course de réglage, et qui collaborent avec des faces opposées (27, 28 ou 29,30) prévues sur le corps de mandrin (2).

2. Mandrin de puissance d'après la revendication 1,
**caractérisé en ce que**
la face de portée cylindrique (22) et les deux faces de butée (23, 24 ou 25, 26) prévues de part et d'autre de celle-ci, s'étendent à peu près sur un tiers de la longueur axiale du boulon articulé (21).

3. Mandrin de puissance d'après les revendications 1 ou 2,
**caractérisé en ce que**
pour l'appui anti-torsion des boulons articulés (21), les faces de butée (23, 24) sont pratiquées sur les faces donnant sur l'axe longitudinal et/ou sur l'enveloppe extérieure du corps de mandrin (2) des boulons articulés (21).

4. Mandrin de puissance d'après une des revendications 1 à 3,
**caractérisé en ce que**
pour la limitation de la course de réglage axiale des boulons articulés (21), les faces de butée (25, 26) sont pratiquées sur les faces des boulons articulés (21) donnant sur les mors d'entraînement (8).

5. Mandrin de puissance d'après les revendications 3 ou 4,
**caractérisé en ce que**
les faces de butée (23, 24 ou 25, 26) prévues sur les boulons articulés (21) sont orientées respectivement perpendiculaires l'une par rapport à l'autre.

6. Mandrin de puissance d'après une des revendications 1 à 5,
**caractérisé en ce que**
le déport des faces de butée (25, 26) prévues pour la limitation de la course de réglage axiale, par rapport à la face de portée cylindrique (22), correspond à la course descendante déterminée du mandrin de puissance (1).

7. Mandrin de puissance d'après une des revendications 1 à 6,
**caractérisé en ce que**
la course descendante prévue du mandrin de puissance (1) est déterminée par des évidements pratiqués dans le corps du mandrin (2), à savoir dans des faces qui, au niveau des extrémités libres des boulons articulés (21), sont pratiquées dans les faces donnant sur la face frontale du corps du mandrin (2), et/ou par le déport des faces de butée (25, 26) des boulons articulés (21) par rapport à la face de portée cylindrique (22).

8. Mandrin de puissance d'après une des revendications 1 à 7,
**caractérisé en ce que**
pour l'appui anti-torsion des boulons articulés (21), le corps du mandrin (2) est muni, au niveau de l'évidement (4) les logeant, d'une ou de deux faces opposées (27, 28) assignées aux faces de butée (23, 24).

9. Mandrin de puissance d'après une des revendications 1 à 8,
**caractérisé en ce que**
pour le logement des boulons articulés (21), le corps du mandrin (2) est muni, au niveau de l'évidement (4), respectivement d'une face opposée (29, 30) perpendiculaire à l'axe et donnant sur la face frontale du corps du mandrin (2) qui sert à la butée des boulons articulés (21) en position serrée.

10. Mandrin de puissance d'après une des revendications 1 à 9,
**caractérisé en ce que**
les passages des leviers de renvoi (10), du piston (6) et, le cas échéant, d'autres composants du mandrin de puissance (1) portant l'un sur l'autre sont, rendus étanches aux liquides par des joints (19, 20, 20') insérés.
